# EUROPEAN PATENT APPLICATION

(11) **EP 4 640 547 A1**
(43) Date of publication of application: **29.10.2025**
(21) Application number: 24190399.6
(22) Date of filing: 23.07.2024
(51) Int. Cl.: B63B 32/73

(54) **CONNECTOR AND FLOATING DEVICE**

(30) Priority: 24.04.2024 CN 202410501899
(71) Applicant: Dongguan Polyfilm Plastic Products Company Limited, Dong Guan City, Guang Dong Province 523000 (CN)
(72) Inventor: Huang, Sheng Qiu, Dong Guan City, 523000 (CN)
(74) Representative: Finnegan Europe LLP

(57) **Abstract**

The present disclosure relates to a connector and a floating device. The connector includes a first housing and a second housing abutted against each other, the first housing and the second housing defines an accommodating cavity for receiving a connecting cord between the first housing and the second housing. A first end of the connector is provided with a through hole in communication with the accommodating cavity and configured to allow the connecting cord to pass through. An end surface of a second end of the first housing is provided with an engaging arm projecting outward, and the engaging arm is provided with a protruding finger extending about a rotation axis of the connector. An outer peripheral wall of a second end of the second housing includes a curved wall provided with an engaging boss projecting outward. When two connectors are connected to each other, the second ends of the two connectors are abutted against each other, and the protruding finger of any one of the connectors is engaged with the engaging boss of the other of the connectors by a relative rotation of the two connectors, thereby preventing the two connectors from being separated from each other in the rotation axis.

## Description

### TECHNICAL FIELD

The present disclosure relates to a connector and a floating device.

### BACKGROUND

A plurality of flotation devices can be connected together for use as a whole or disassembled for individual use as required. The floating device generally includes a floating body and a connecting cord connected to the floating body. The user can connect the connecting cords of the plurality of floating devices sequentially or separate the connecting cords of the plurality of floating devices from each other as required. However, how to realize a quick connection or disconnection of the connecting cords is a problem that needs to be solved urgently.

### SUMMARY

According to a first aspect of the present disclosure, a connector is provided. The connector includes a first housing and a second housing abutted against each other. The first housing and the second housing define an accommodating cavity for receiving a connecting cord between the first housing and the second housing. A first end of the connector corresponds to a first end of the first housing and a first end of the second housing, and a second end of the connector corresponds to a second end of the first housing and a second end of the second housing. The first end of the connector is provided with a through hole, and the through hole is in communication with the accommodating cavity and configured to allow the connecting cord to pass through. An end surface of the second end of the first housing is provided with an engaging arm projecting outward, the engaging arm is provided with a protruding finger, and the protruding finger extends about a rotation axis of the connector. An outer peripheral wall of the second end of the second housing includes a curved wall, and the curved wall is provided with an engaging boss projecting outward. When two connectors are connected to each other, the second ends of the two connectors are abutted against each other, and the protruding finger of any one of the two connectors is engaged with the engaging boss of the other of the two connectors by a relative rotation of the two connectors, thereby preventing the two connectors from being separated from each other in the rotation axis.

In the first aspect, an outer peripheral wall of the second end of the second housing is provided with a concave portion, a wall body of the concave portion includes a side wall and the curved wall, the side wall faces the engaging boss, and a guide channel cooperating with the protruding finger is formed between the side wall and the engaging boss.

In the first aspect, one of a wall body of the guide channel and the protruding finger is provided with a limiting protrusion, and the other of the wall body of the guide channel and the protruding finger is provided with a limiting recess. When the two connectors are connected to each other, the limiting protrusion of any one of the two connectors is engaged with the limiting recess of the other of the two connectors to prevent the relative rotation of the two connectors.

In the first aspect, the wall body of the concave portion includes two end walls, and the two end walls are configured to limit a range of the relative rotation of the two connectors.

In the first aspect, the two end walls include a first end wall and a second end wall, a notch is formed between the first end wall and the engaging boss, and the second end wall is connected to the engaging boss.

In the first aspect, an inner peripheral wall of the second end of the first housing includes a curved wall surface, an end surface of the second end of the second housing has a curved protrusion extending toward the curved wall surface, and a curved channel is formed between the curved wall surface and the curved protrusion. An end surface of the second end of the second housing is provided with a curved tab projecting outward, and the curved tab faces the engaging arm. When the two connectors are rotated relative to each other, the curved tab of any one of two the connectors is slidably engaged with the curved channel of the other of the two connectors.

In the first aspect, the inner peripheral wall of the second end of the first housing further includes a boss projecting from the curved wall surface, and the boss of any one of the two connectors is configured to be abutted against an end of the curved tab of the other of the two connectors.

In the first aspect, an inner wall of the engaging arm extends about the rotation axis, the protruding fingers projecting radially from the inner wall of the engaging arm; and/or, the abutting surfaces of the first housing and the second housing are in a concave-convex fit.

In the first aspect, the first housing and the second housing are engaged together or connected to each other by a fastener; and/or, a positioning member configured to position the connecting cord is provided in the accommodating cavity.

In the first aspect, a channel configured to allow the connecting cord to pass through is formed between a wall body of the accommodating cavity and the positioning member, and the channel is dimensioned so as not to allow the limiting member disposed on the connecting cord to pass through.

In the first aspect, the positioning member extends from one of the first housing and the second housing along a direction perpendicular to the rotation axis, and the positioning member has a center hole; and the other of the first housing and the second housing is provided with a mounting hole, through which the fastener is connected to the center hole; or, the other of the first housing and the second housing is provided with a connecting post, which is inserted into the center hole.

In the first aspect, one of the first housing and the second housing is provided with an elastic arm, the other of the first housing and the second housing is provided with an engaging hole, and the elastic arm is detachably engaged with the engaging hole.

In the first aspect, an outer peripheral wall of the second housing is provided with a lock identification portion.

According to a second aspect of the present disclosure, a floating device is provided. The floating device includes a floating body, a connecting cord and the above connector. The connecting cord is connected to the floating body, and the connector is connected to the connecting cord.

### BRIEF DESCRIPTION OF THE DRAWINGS

The accompanying drawings forming part of the present disclosure are intended to provide further understanding of the present disclosure. Exemplary embodiments of the present disclosure and descriptions thereof are intended to explain the present disclosure, and do not constitute any inappropriate limitation on the present disclosure.
FIG. 1 is a schematic diagram illustrating two connecting cords connected together through two connectors according to a first embodiment of the present disclosure.
FIG. 2 shows a perspective view of the two connectors in FIG. 1, with the two connectors being separated from each other.
FIGS. 3 to 6 show exploded views of the connector in FIG. 1 from different perspectives.
FIGS. 7 to 9 show perspective views of the connector according to the first embodiment of the present disclosure from different perspectives.
FIGS. 10 to 12 illustrate a connecting process of two connectors according to the first embodiment of the present disclosure.
FIGS. 13 and 14 show perspective views of a connector according to a second embodiment of the present disclosure from different perspectives.
FIGS. 15 and 16 show exploded views of the connector according to the second embodiment of the present disclosure from different perspectives.

### DETAILED DESCRIPTION

### First Embodiment

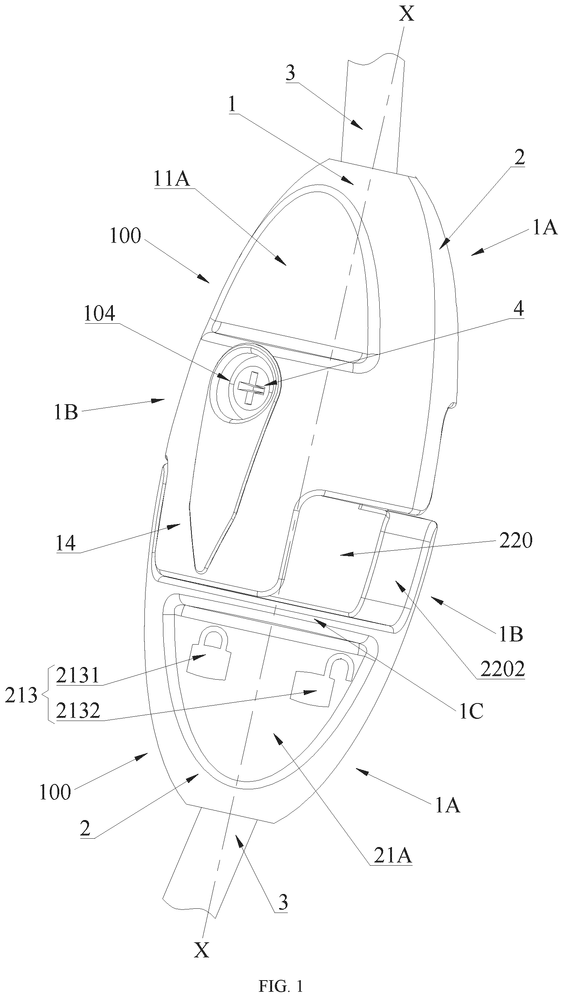

FIG. 1 is a schematic diagram illustrating two connectors 100 according to a first embodiment of the present disclosure, with the two connectors being connected together. Each connector 100 is connected to a connecting cord 3. The connecting cord 3 is connected, for example, to a floating body. By connection between the two connectors 100, the two connecting cords 3 respectively connected to the two connectors 100 are connected together, and thereby the two floating bodies connected to the two connecting cords 3 can be connected together. The connector 100 provided by embodiments of the present disclosure is not limited to be applied to a floating device, but can be applied to any suitable product.

Referring to FIG. 1, each of the two connectors 100 has a rotation axis X-X, and the two connectors 100 connected together can be relatively rotated about the rotation axis X-X to switch between a locked state and an released state. In the locked state, the two connectors 100 cannot be separated from each other along a direction of the rotation axis X-X. In the released state, the two connectors 100 can be separated from each other along the direction of the rotation axis X-X. In some embodiments, the two connectors 100 connected together are substantially shuttle-shaped. The rotation axis X-X may also be referred to as a longitudinal axis of each connector 100. In some alternative embodiments, the two connectors 100 connected together may also be of other shapes.

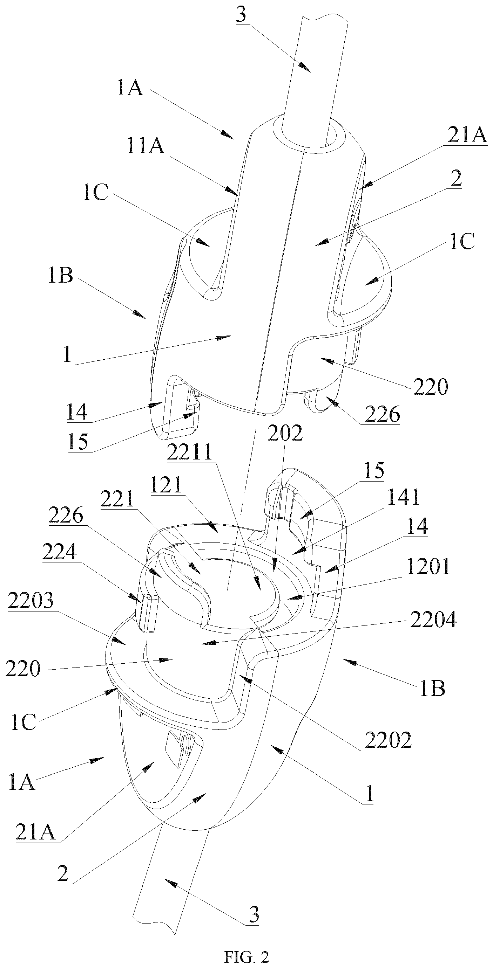

FIG. 2 shows a perspective view of the two connectors 100 shown in FIG. 1, with the two connectors 100 being separated from each other. When the two connectors 100 are separated from each other, the two connecting cords 3 connected by the two connectors 100 are separated from each other, and thus the two floating bodies connected to the two connecting cords 3 respectively are also separated from each other.

In some embodiments, each connector 100 includes a flat head end 1A and a round head end 1B. The flat head end 1A and the round head end 1B may be transitioned through a step portion 1C. The flat head end 1A includes, for example, two surfaces 11A and 21A facing away from each other. In some embodiments, both the surface 11A and the surface 21A may be parallel to the rotation axis X-X. In some embodiments, the surface 11A and the surface 21A may be inclined relative to the rotation axis X-X, respectively. The flat head end 1A is not limited to be implemented as the above example. Each of the connecting cords 3 extends outward from the flat head end 1A. The round end 1B of any one of the connectors 100 is configured to be locked together with the round end 1B of the other of the connectors 100 by means of a relative rotation. The user's hands can easily pinch the flat head end 1A of each of the two connectors 100. More specifically, the user's fingers pinch the surfaces 11A and 21A of each of the flat head ends 1A, and make the round head ends 1B of the two connectors to be relatively rotated. It should be noted that a cross section shape of the round head end 1B described above is not limited to a rigid circle. It should be understood that in some alternative embodiments, the structure of each connector 100 may be implemented in other ways and not limited to the examples described above.

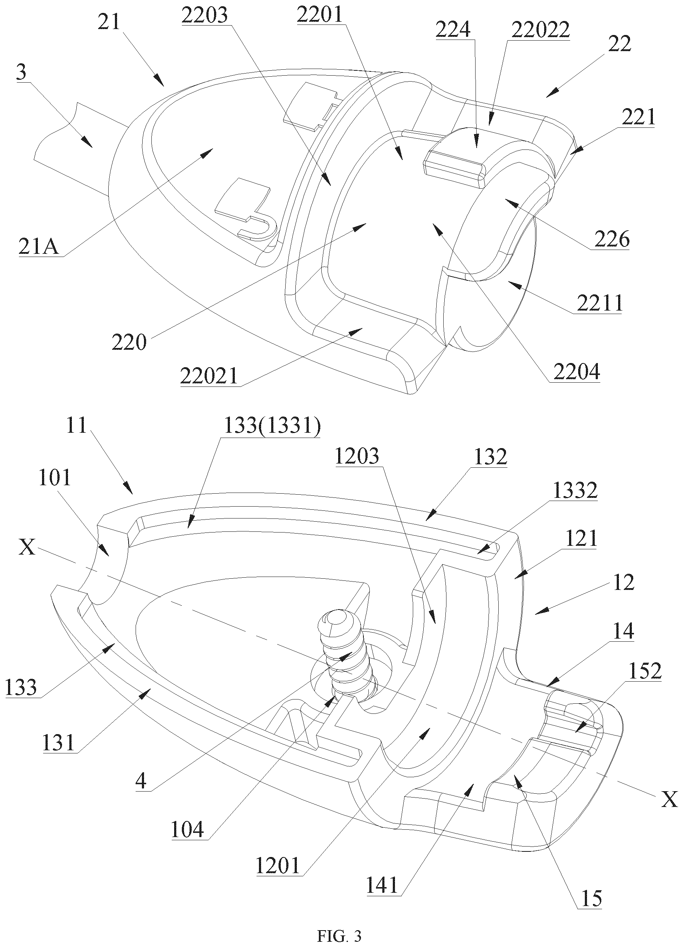

FIGS. 3 to 6 show exploded views of the connector 100 from a plurality of perspectives. The connector 100 include a first housing 1 and a second housing 2. In this embodiment, after the first housing 1 and the second housing 2 are butted together, the first housing 1 and the second housing 2 are fixed together by a fastener 4. An accommodating cavity 10 is formed between the first housing 1 and the second housing 2 which are butted together. The connector 100 further includes a through hole 101 located at a first end of the connector 100 and in communication with the accommodating cavity. A center line of the through hole 101 substantially coincides with, for example, the rotation axis X-X. The connecting cord 3 is connected to the connector 100 in the accommodating cavity 10 and exits the accommodating cavity 10 through the through hole 101.

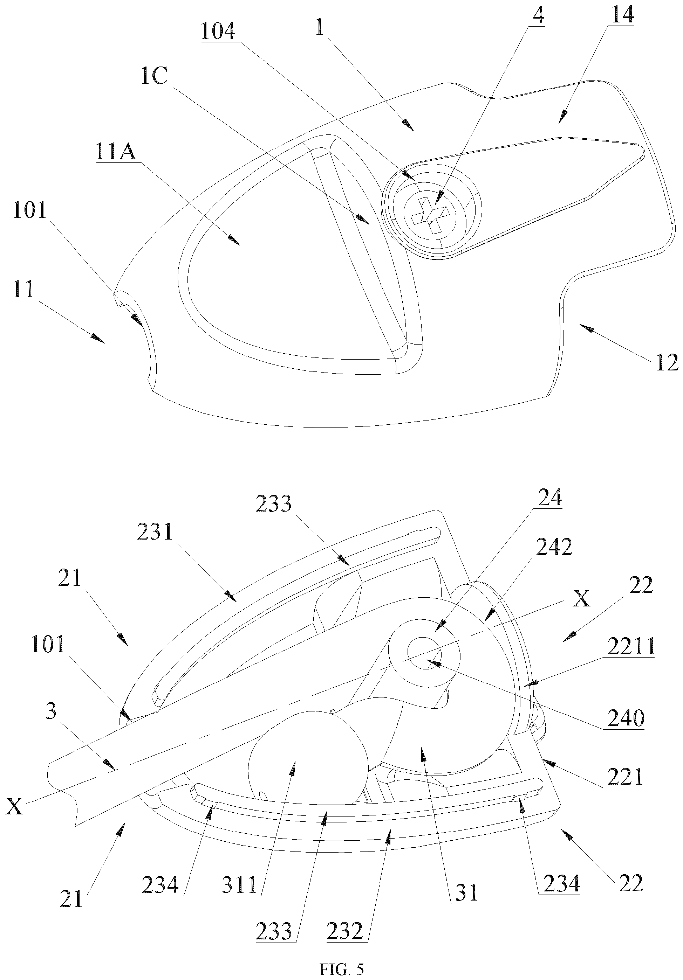

Referring to FIG. 5, in some embodiments, an end 31 of the connecting cord 3 is fixed in the accommodating cavity 10 to hide a connecting structure between the connecting cord 3 and the connector 100. More specifically, a positioning member 24, which is configured to be engaged with the connecting cord 3, is disposed in the accommodating cavity 10, an end of the connecting cord 3 may be wound around the positioning member 24, and another end of the connecting cord 3 which is not shown may exit the accommodating cavity 10 through the through hole 101. In some alternative embodiments, a middle portion of the connecting cord 3 may be wound around the positioning member 24, and both ends of the connecting cord 3 exit the accommodating cavity 10 through the through hole 101.

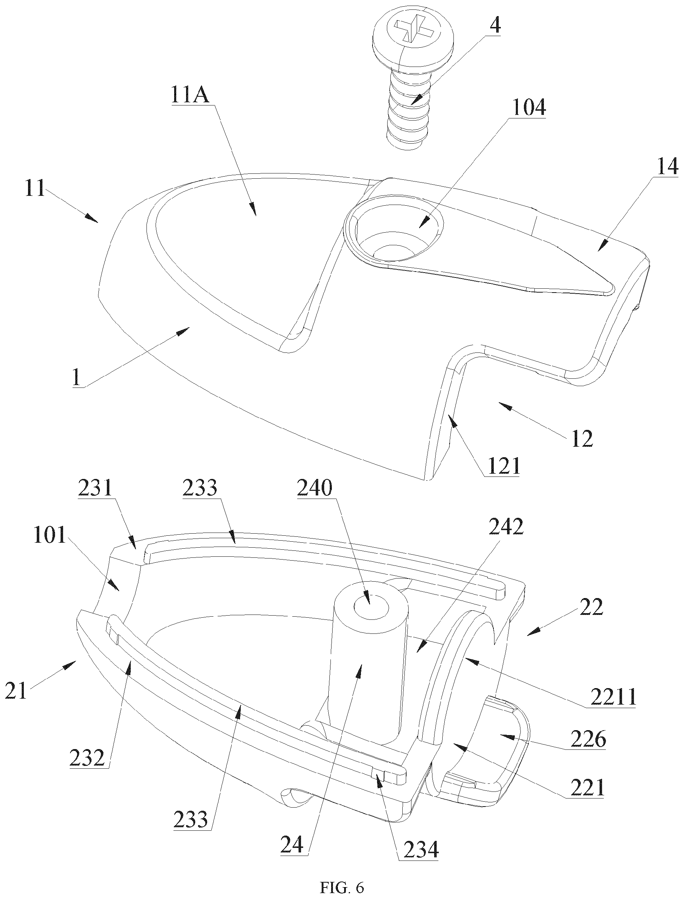

Referring to FIGS. 5 and 6, in this embodiment, the positioning member 24 extends from the second housing 2 toward the first housing 1, for example, in a direction perpendicular to the rotation axis X-X. In some embodiments, the positioning member 24 may further has a center hole 240. A position of the first housing 1 corresponds to the center hole 240 may be provided with a mounting hole 104. The fastener 4 passes through the mounting hole 104 and is then connected to the center hole 240 of the positioning member 24. The fastener 4 connects the first housing 1 and the second housing 2 together as well as reinforces the structural strength of the positioning member 24. The fastener 4 may be, for example, a screw. In some alternative embodiments, the positioning member 24 may extend from the first housing 1 toward the second housing 2, and the mounting hole configured to mount the fastener 4 is correspondingly disposed on the second housing 2.

Referring to FIG. 5, the first end 31 of the connecting cord 3 is wound around the positioning member 24, and a limiting member 311 is disposed at an end portion of the first end 31 of the connecting cord 3, and is located in the accommodating cavity 10. The limiting member 311 is, for example, spherical or in another suitable shape, and the limiting member 311 may be a different part from the connecting cord 3. A channel 242 configured to allow the connecting cord 3 to pass through is formed between a wall body of the accommodating cavity 10 and the positioning member 24, and the channel 242 is dimensioned so as not to allow the limiting member 311 to pass through. In this embodiment, the channel 242 described above is formed between the positioning member 24 and a curved protrusion 2211 (which is described below). When the connecting cord 3 located outside the connector 100 is pulled, the limiting member 311 is caught at the channel 242, so that the first end 31 of the connecting cord 3 is not separated from the connector 100. In some embodiments, the limiting member 311 may be further dimensioned to be unable to pass through the through hole 101, and the limiting member 311 can be caught at the through hole 101 if the limiting member 311 inadvertently passes through the channel 242.

In some alternative embodiments, the first end 31 of the connecting cord 3 may form the limiting member 311 directly by knotting the first end 31 of the connecting cord 3, instead of forming the limiting member 311 by means of an additional part. Or, in some alternative embodiments, the first end 31 of the connecting cord 3 may be tied directly to the positioning member 24, instead of being provided with the limiting member 311. Or, in some alternative embodiments, the first end 31 of the connecting cord 3 may not be connected to the positioning member 24, but rather the first end 31 of the connecting cord 3 may be restricted from departing from the connector 100 by the engagement between the limiting member 311 and the through hole 101.

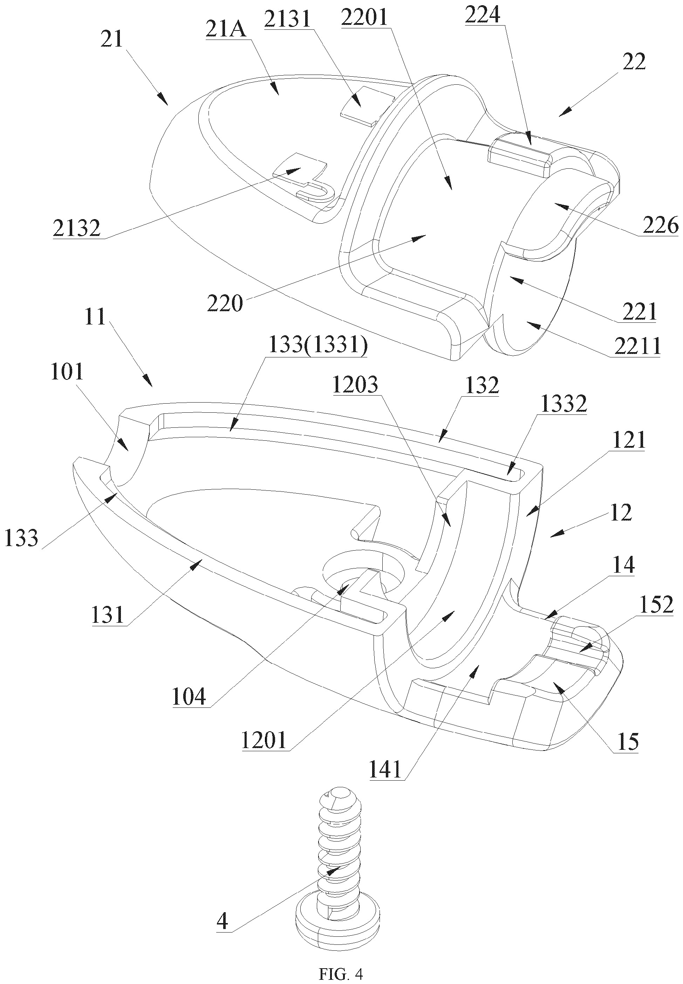

Referring again to FIGS. 3 and 4, the first housing has an abutting surface (referred to as a first abutting surface) 131 and an abutting surface (referred to as a second abutting surface) 132 located on two sides of the rotation axis X-X of the connector 100, respectively. The first abutting surface 131 and the second abutting surface 132 may be symmetrical relative to the rotation axis X-X. In some embodiments, the first abutting surface 131 is substantially in the same plane as the second abutting surface 132, and the rotation axis X-X is also in the same plane. The first housing 1 is, for example, an integrally molded symmetrical structure.

Referring to FIGS. 5 and 6, the second housing has an abutting surface (referred to as a first abutting surface) 231 and an abutting surface (referred to as a second abutting surface) 232 located on two sides of the rotation axis X-X, respectively. The first abutting surface 231 and the second abutting surface 232 may be symmetrical relative to the rotation axis X-X. In some embodiments, the first abutting surface 231 is substantially in the same plane as the second abutting surface 232, and the rotation axis X-X is also in the same plane. The second housing 2 is, for example, an integrally molded symmetrical structure.

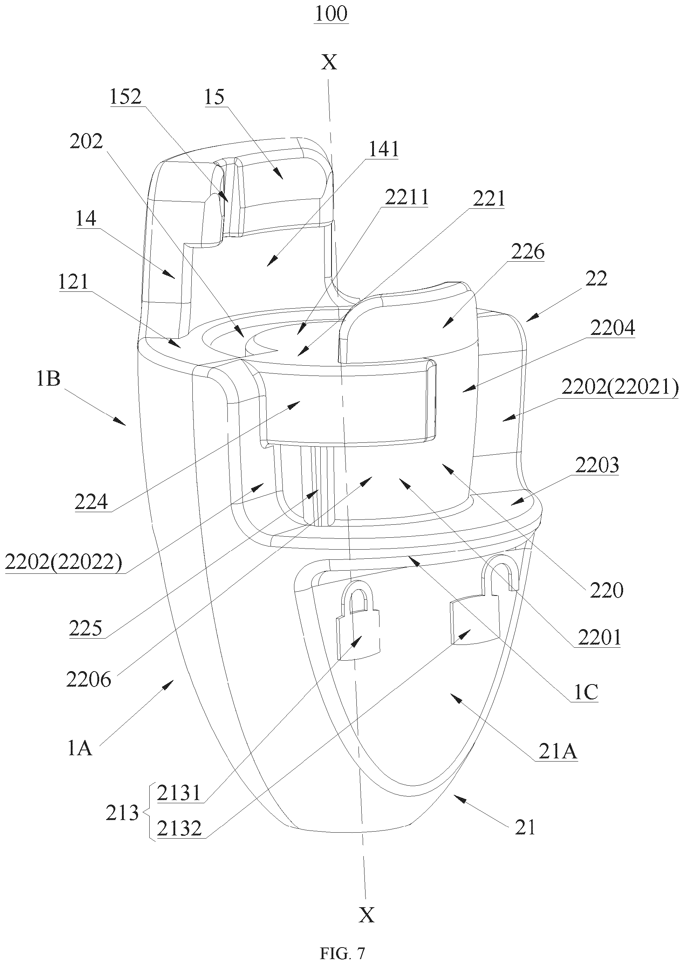

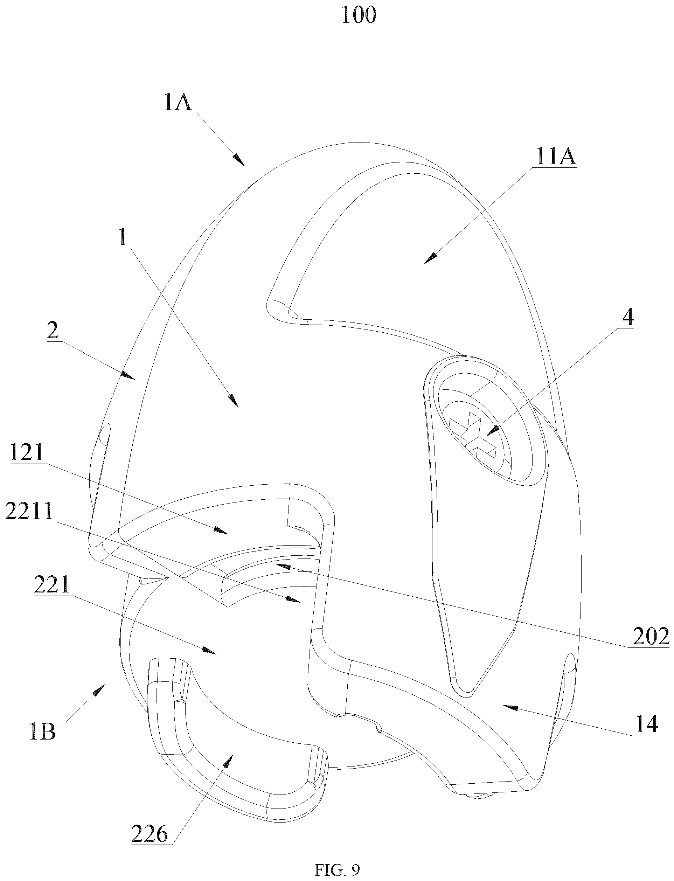

Referring to FIGS. 7 to 9, when the first housing 1 and the second housing 2 are butted together, the first abutting surface 131 of the first housing 1 abuts against the first abutting surface 231 of the second housing 2, and the second abutting surface 132 of the first housing 1 abuts against the second abutting surface 232 of the second housing 2.

Referring again to FIGS. 3 to 6, each of the abutting surfaces 131, 132 of the first housing 1 is provided with a concave portion 133, and each of the abutting surfaces 231, 232 of the second housing is provided with a convex portion 233. When the first housing 1 and the second housing 2 are butted together, the convex portion 233 is embedded in the concave portion 133, so that the abutting surfaces of the first housing 1 and the abutting surfaces of the second housing 2 are in a concave-convex fit, which can increase the firmness of the assembly of the first housing 1 and the second housing 2.

In this embodiment, the concave portion 133 extends along the abutting surfaces 131, 132 of the first housing 1. A part of the concave portion 133 is formed by the step portion 1331, and another part of the concave portion 133 is formed by a groove 1332. In some alternative embodiments, the concave portion 133 may be entirely formed by the step portion or by the groove. The convex portion 233 includes a convex strip extending along the abutting surfaces 231, 232 of the second housing 2. At least a part of the convex strip may further be provided with a convex rib 234, which can be better abutted against the wall body of the concave portion 133.

In some alternative embodiments, the concave portions 133 and the convex rib 233 may be implemented in other ways. For example, the concave portion 133 may be disposed on the second housing 2, and the convex strip 233 may be disposed on the first housing 1. Alternatively, the concave portion 133 and the convex portion 233 may also adopt other structures (as described below in a second embodiment).

Still referring to FIGS. 3 to 6, the first housing 1 includes a first end 11 and a second end 12. The second housing 2 includes a first end 21 and a second end 22. Both the first end 11 of the first housing 1 and the first end 21 of the second housing 2 correspond to the flat head end 1A of the connector 100, which may also be referred to as the first end of the connector 100. A surface 11A is located on the first housing 1, and a surface 21A is located on the second housing 2. Both the second end 12 of the first housing 1 and the second end 22 of the second housing 2 correspond to the round end 1B of the connector 100, which may also be referred to as the second end of the connector 100. The first end 11 of the first housing 1 has a half hole, the first end 21 of the second housing 2 also has a half hole, and the half hole of the first end 11 and the half hole of the first end 21 together form the through hole 101.

A part of the end surface 121 of the second end 12 of the first housing 1 is provided with an engaging arm 14 extending outward. The engaging arm 14 extends outward from the end surface 121 substantially along a direction parallel to the rotation axis X-X. Alternatively, the engaging arm 14 is inclined at a small angle toward a direction approaching the rotation axis X-X while extending toward the outside of the end surface 121. An end of the engaging arm 14 (an end away from the end surface 121) is provided with a protruding finger 15.

In this embodiment, the engaging arm 14 extends for a long distance in a direction about the rotation axis X-X, and has a certain thickness in a direction perpendicular to the rotation axis X-X. An inner wall 141 of the engaging arm 14 is substantially curved and extends about the rotation axis X-X. The protruding finger 15 extends radially inward from the inner wall 141 of the engaging arm 14. That is to say, the extending direction of the protruding finger 15 is substantially perpendicular to the rotation axis X-X.

In some alternative embodiments, the engaging arm 14 and the protruding finger 15 may also be implemented in other ways. For example, the protruding finger 15 extends from the end of the engaging arm 14 in the direction about the rotation axis X-X, i.e., the protruding finger 15 extends from the end of the engaging arm 14 in a circumferential direction. In this case, the protruding finger 15 may not protrude radially inward relative to the inner wall 141 of the engaging arm 14.

Referring to FIGS. 7 to 9, perspective views of the connector 100 from different perspectives are illustrated. In some embodiments, when the first housing 1 and the second housing 2 are butted together, the end surface 221 of the second end 22 of the second housing 2 is aligned with the end surface 121 of the first housing 1. An outer peripheral wall of the second end 22 of the second housing 2 includes a curved wall 2201 extending about the rotation axis X-X. A part of the curved wall 2201 is provided with an engaging boss 224 extending radially outward. The engaging boss 224 extends about the rotation axis X-X for a certain length.

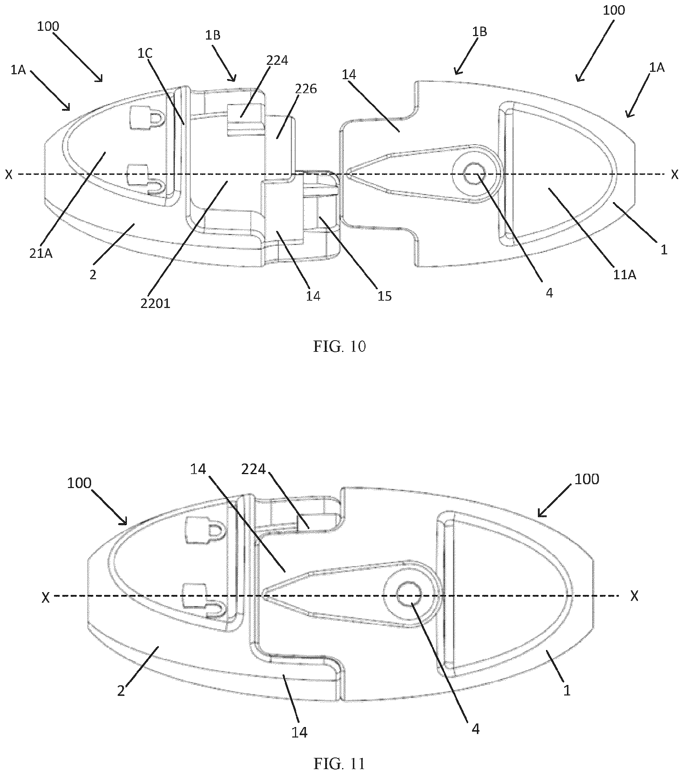

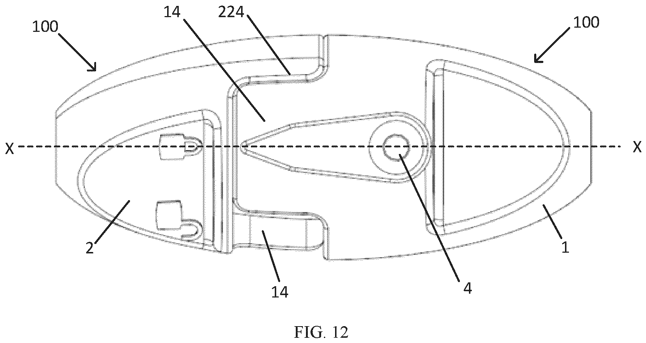

Referring to FIGS. 10 to 12, a connection process between the two connectors 100 is illustrated. Referring to FIG. 10, before the two connectors 100 are connected to each other, the round ends 1B of the two connectors 100 face each other, the rotation axes X-X of the two connectors 100 are coincident with each other, and the protruding finger 14 of any one of the connectors 100 is circumferentially staggered from the engaging boss 224 of the other of the connectors 100. Then, the two connectors 100 are moved along the direction of the rotation axis X-X, and the protruding finger 14 and the engaging boss 224 which are circumferentially staggered from each other do not affect the mutual proximity of the two connectors 100. Referring to FIG. 11, the two connectors 100 may be moved all the way to a position where the end surfaces of the second ends of the two connectors 100 are abutted against each other. When the end surface 121 of the first housing 1 of the connector 100 is flush with the end surface 122 of the second housing of the connector 100, the end surface of the second end of the connector 100 corresponds to the end surface of the round head end 1B, and specifically includes the end surface 121 of the first housing and the end surface 221 of the second housing 2. In this case, the protruding finger 14 of any one of the connectors 100 is staggered from the engaging boss 224 of the other of the connectors 100 in the direction of the rotation axis X-X. As shown in FIG. 12, subsequently, the two connectors 100 can be rotated about the rotation axis X-X relative to each other to cause the protruding finger 14 of any one of the connectors to be engaged with the engaging boss 224 of the other of the connectors. In this case, the two connectors 100 cannot be separated from each other along the direction of the rotation axis X-X.

When it is necessary to separate the two connectors 100 from each other, the two connectors 100 are relatively rotated about the rotation axis X-X to a state shown in FIG. 11, and then the two connectors 100 are pulled apart along the direction of the rotation axis X-X.

Referring again to FIGS. 7 to 9, the outer peripheral wall of the second end 22 of the second housing 2 is provided with a recess 220, which is configured to receive the engaging arm 14 of the other connector 100. The wall body of the recess 220 includes the above curved wall 2201, a side wall 2203, and two end walls 2202. The two end walls 2202 are respectively located at two circumferential ends of the curved wall 2201, and include a first end wall 22021 and a second end wall 22022. The side wall 2203 is away from the end surface 221 of the second housing 21. The side wall 2203 is formed, for example, on a side wall surface of the step portion 1C.

The engaging boss 224 is located in the recess 220. A notch 2204 is formed between the engaging boss 224 and the first end wall 22021, and the notch 2204 can guide the engaging arm 14 into the recess 220. In some embodiments, the engaging boss 224 is connected to the second end wall 22022 and the recess 220 is substantially L-shaped. A guide channel 2206 configured to guide the protruding finger 15 to slide is formed between the side wall 2203 and the engaging boss 224. The engagement of the two end walls 2202 with the engaging arm 14 (more specifically, the protruding finger 15 on the engaging arm 14) may be used to limit a range of relative rotation of the two connectors 100.

Referring to FIG. 7, the curved wall 2201 is provided with a limiting protrusion 225. More particularly, the limiting protrusion 225 is located in the guide channel 2206. Specifically, the limiting protrusion 225 is provided on the wall body of the guide channel 2206. The limiting protrusion 225 is, for example, close to the second end wall 22022. The protruding finger 15 is provided with a limiting recess 152. When the engaging arm 14 of each of the two connectors 100 is engaged with the corresponding engaging boss 224, the two connectors 100 are further locked together by the engagement between the limiting recess 152 on each of the protruding fingers 15 and the corresponding limiting protrusion 225, preventing the two connectors 100 from undesired relative rotation.

The limiting protrusion 225 is, for example, a rib extending in a direction parallel to the rotation axis X-X. The limiting protrusion 225 is located between the side wall 2203 and the engaging boss 224. A shape of the limiting recess 152 matches a shape of the limiting protrusion 225. In some alternative embodiments, the limiting protrusion 225 and the limiting recess 152 may also be implemented in other ways. And, in some alternative embodiments, the limiting protrusion 225 may be disposed on the protruding finger 15, and the limiting recess 152 may be disposed on the curved wall 2201.

In some embodiments, the second housing 2 may be provided with a lock identification portion 213 configured to indicate the locked state of the two connectors 100. The lock identification portion 213 includes, for example, a lock identifier 2131 and a release identifier 2132. When the engaging arm 14 of each connector 100 is rotated in the recess 220 in a direction toward the lock identifier 2131, the two connectors 100 can be locked together through the limiting protrusion 225 and the limiting recess 152. When the engaging arm 14 of each connector 100 is rotated in the recess 220 in a direction toward the release identifier 2132, the limiting protrusion 225 and the limiting recesses 152 of the two connectors 100 can be released from each other, and the two connectors 100 can thereafter be moved away from each other in the direction of the rotation axis X-X.

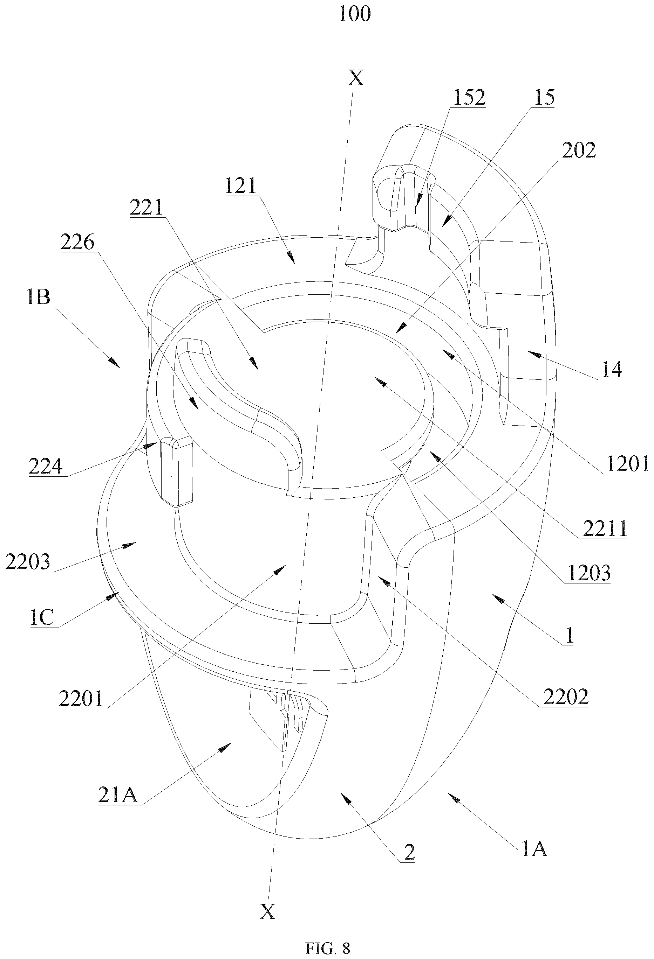

Referring again to FIGS. 4 and 8, an inner peripheral wall of the second end 12 of the first housing 1 includes a curved wall surface 1201, and the curved wall surface 1201 extends from the end surface 121 toward the accommodating cavity 10. The end surface 221 of the second end 22 of the second housing 2 has a curved protrusion 2211 extending toward the curved wall surface 1201, and a curved channel 202 is formed between the curved protrusion 2201 and the curved wall surface 1201. The end surface 221 of the second end 22 of the second housing 2 is also provided with a curved tab 226 projecting outward. The curved tab 226 extends from the end surface 221 in a direction substantially parallel to the rotation axis X-X, and the curved tab 226 faces the engaging arm 14.

When the two connectors 100 are connected to each other, the engaging arm 14 of any one of the connectors 100 extends into the recess 220 of the other of the connectors 100 and the curved tab 226 of any one of the connectors 100 also extends into the curved channel 202 of the other of the connectors 100. When the two connectors 100 are relatively rotated about the rotation axis X-X, each curved tab 226 is slidably engaged with the corresponding curved channel 202. The relative rotation of the two connectors 100 about the rotation axis X-X is further ensured by the engagement between the curved tab 226 and the curved channel 202, and the two connectors 100 can be effectively prevented from being separated from each other accidentally after being connected in place, so that the connection between the two connectors 100 is more reliable.

Referring to FIGS. 3 and 4, in some embodiments, the inner peripheral wall of the second end 12 of the first housing 1 further includes a boss 1203 protruding relative to the curved wall surface 1201. The boss 1203 can act to block the connecting cord 3 located in the accommodating cavity 10. When the two connectors 100 are connected, the end of the curved tab 226 of each connector 100 away from the end surface 221 may, for example, abut against the boss 1203. The structure of the boss 1203 does not interfere with the mounting of the connecting cord 3.

### Second Embodiment

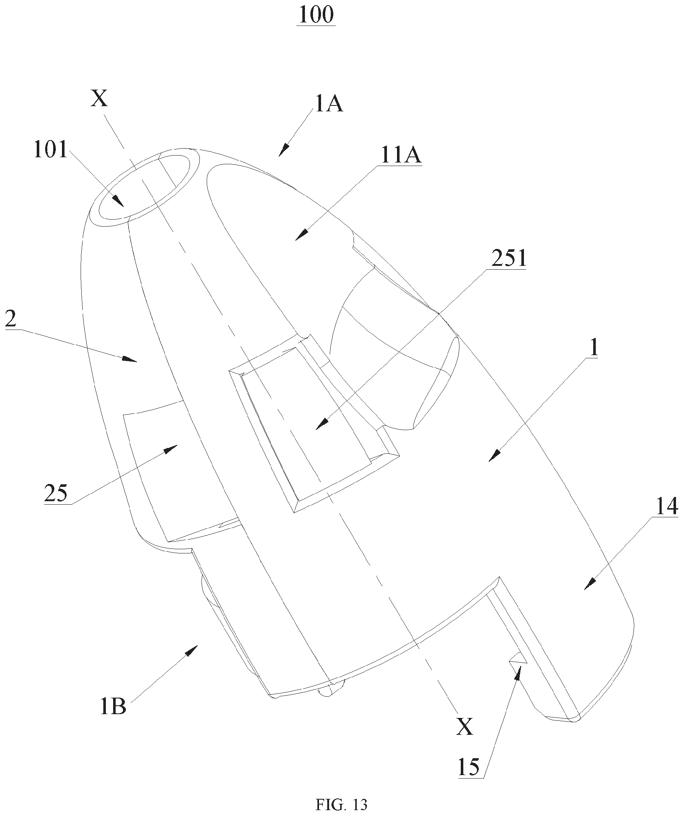

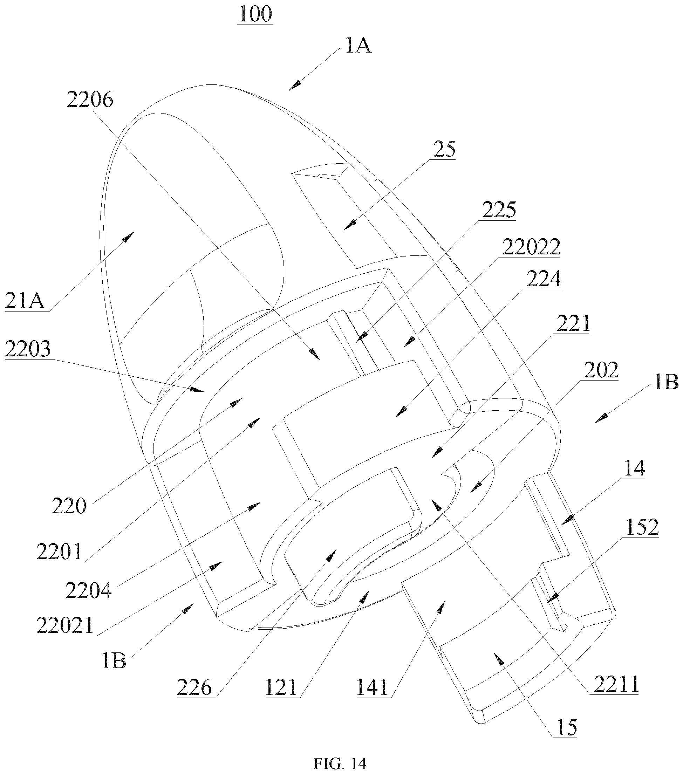

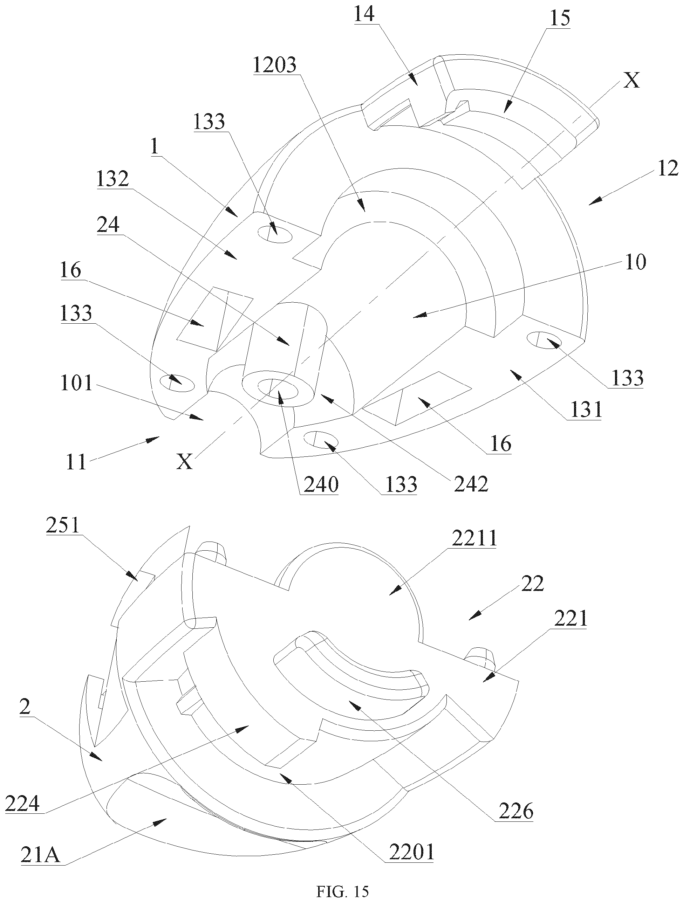

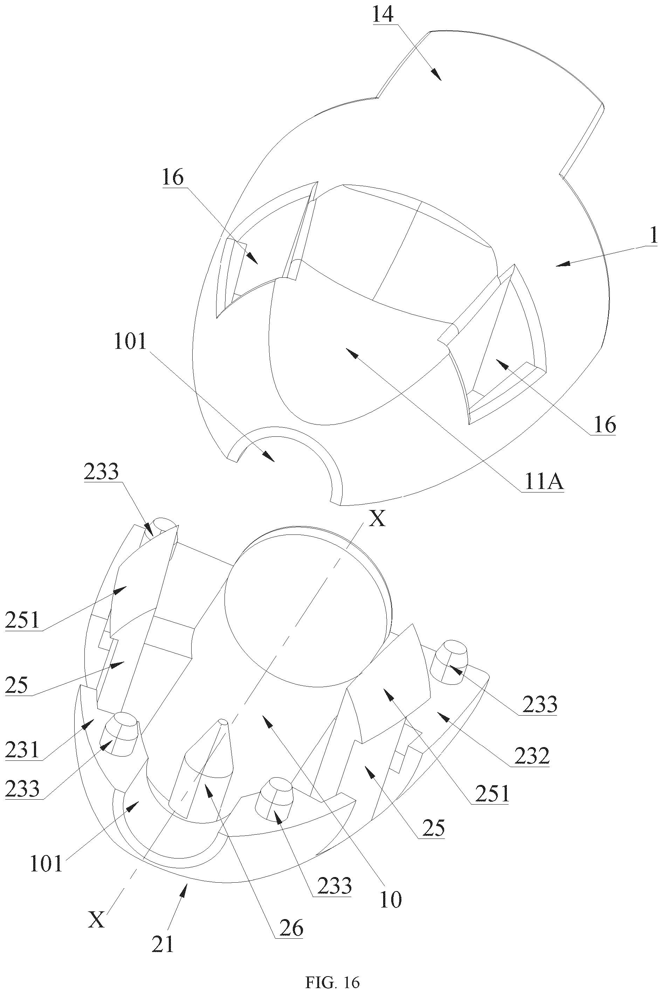

FIGS. 13 and 14 show perspective views of a connector 100 according to a second embodiment of the present disclosure from different perspectives, which is a variant of the connector 100 of the first embodiment described above. FIGS. 15 and 16 show exploded views of the connector 100 from different perspectives. In case of no conflict, the structure of the connector 100 of the second embodiment may refer to the structure of the connector 100 of the first embodiment described above.

In this embodiment, the first housing 1 and the second housing 2 of the connector 100 are not fixed together by the fastener 4, but are fixed together by means of a snap fit. Specifically, the first housing 1 is provided with engaging holes 16 on both sides of the rotation axis X-X. The engaging holes are disposed, for example, on the first abutting surface 131 and the second abutting surface 132, respectively. The second housing 2 is provided with elastic arms 25 on both sides of the rotation axis X-X. The elastic arms 25 are provided on, for example, the first abutting surface 231 and the second abutting surface 232. The end of the elastic arm 25 may be provided with a protruding finger 251. Each of the elastic arms 25 may pass through and be detachably engaged with the corresponding engaging hole 16 through the protruding finger 251, so as to detachably connect the first housing 1 and the second housing 2 together.

In some alternative embodiments, the first housing 1 and the second housing 2 may also be connected through other suitable snap-fit structures. For example, the engaging hole 16 may be disposed on the second housing 2, and the elastic arm 25 may be disposed on the first housing 1. The number of engaging holes 16 and the number of elastic arms 25 may be changed as required.

In this embodiment, the flat head end 1A of the connector 100 further includes two surfaces 11A and 21A facing away from each other. Unlike the first embodiment described above, the surface 11A and the surface 21A are inclined relative to the rotation axis X-X, respectively.

A variant of the structure of both the concave portion 133 and the convex portion 233 is also provided in this embodiment. Specifically, each concave portion 133 may be a hole (e.g., a blind hole), and each convex portion 233 may be a convex post. When the first housing 1 and the second housing 2 are butted together, the plurality of convex portions 233 are engaged with the plurality of concave portions 133, thereby improving the strength of the connection between the first housing 1 and the second housing 2. In some embodiments, the engagement between each convex portion 233 and the corresponding concave portion 133 is an interference fit.

Referring to FIGS. 15 and 16, in this embodiment, the positioning member 24 extends from the first housing 1 toward the second housing 2, for example, in a direction perpendicular to the rotation axis X-X. The positioning member 24 is, for example, closer to the through hole 101. A channel 242 configured to allow the connecting cord 3 to pass through is formed between a wall body of the accommodating cavity 10 and the positioning member 24, and the channel 242 is dimensioned so as not to allow the limiting member 311 located at the first end 31 of the connecting cord 3 to pass through.

In some embodiments, the positioning member 24 may further has a center hole 240. The second housing 2 is provided with a connecting post 26 at a position corresponding to the positioning member 24. The connecting post 26 is configured to be inserted into the center hole 240. The engagement between the positioning member 24 and the connecting post 26 enhances the connection of the first housing 1 and the second housing 2 on the one hand, and the structural strength of the positioning member 24 on the other hand. The engagement between the connecting post 26 and the center hole 240 is, for example, an interference fit. In some alternative embodiments, the positioning member 24 may be disposed on the second housing 2, and the connecting post 26 may be disposed on the first housing 1. In some embodiments, the connecting post 26 has a tip end to facilitate insertion into the center hole 240.

In some embodiments, when the first end 31 of the connecting cord 3 is placed in the accommodating cavity 10, the connecting post 26 can penetrate the connecting cord 3 and be then inserted into the center hole 240 during assembly of the first housing 1 and the second housing 2. When the connecting cord 3 is pulled, the limiting member 311 can abut against the positioning member 24 and the connecting post 26 which are sleeved together, which helps to prevent the first end 31 of the connecting cord 3 from being separated from the connector 100 through the through hole 101.

A floating device is also provided according to an embodiment of the present disclosure. The floating device includes a floating body (not shown), a connecting cord and the above connector 100. The connecting cord is connected to the floating body, and the connector 100 is connected to the connecting cord. The floating body may be, for example, but not limited to, a plastic inflator. A plurality of floating bodies can be quickly connected together or separated from each other by means of the respective connectors 100.

The technical features of the embodiments described above may be combined arbitrarily. For the sake of brevity, not all possible combinations of the technical features in the embodiments are described. However, as long as there is no contradiction between the combinations of the technical features, they shall be considered as the scope of the specification.

The above-described embodiments are only some embodiments of the present disclosure, and their description is more specific and detailed, but cannot be understood as a limitation on the scope of the application. It should be noted that, for a person of ordinary skill in the art, several modifications and improvements may be made without departing from the concept of the present disclosure, which are within the protection scope of the present disclosure. Therefore, the scope of protection of this patent application shall be subject to the appended claims.

## Claims

1. A connector (100) comprising a first housing (1) and a second housing (2) abutted against each other, the first housing (1) and the second housing (2) defining an accommodating cavity for receiving a connecting cord (3) between the first housing (1) and the second housing (2);
wherein a first end of the connector (100) corresponds to a first end (11) of the first housing (1) and a first end (21) of the second housing (2), a second end of the connector (100) corresponds to a second end (12) of the first housing (1) and a second end (22) of the second housing (2), the first end of the connector (100) is provided with a through hole (101), and the through hole (101) is in communication with the accommodating cavity (10) and configured to allow the connecting cord (3) to pass through;
wherein an end surface of the second end (12) of the first housing (1) is provided with an engaging arm (14) projecting outward, the engaging arm (14) is provided with a protruding finger (15), and the protruding finger (15) extends about a rotation axis (X-X) of the connector (100);
wherein an outer peripheral wall of the second end (22) of the second housing (2) comprises a curved wall (2201) provided with an engaging boss (224) projecting outward; and
wherein when two connectors (100) are connected to each other, the second ends of the two connectors (100) are abutted against each other, and the protruding finger (15) of any one of the two connectors (100) is engaged with the engaging boss (224) of the other of the two connectors (100) by a relative rotation of the two connectors (100), thereby preventing the two connectors (100) from being separated from each other along the rotation axis (X-X).

2. The connector according to claim 1, wherein an outer peripheral wall of the second end (22) of the second housing (2) is provided with a concave portion (220), a wall body of the concave portion (220) comprises a side wall (2203) and the curved wall (2201), the side wall (2203) faces the engaging boss (224), and a guide channel (2206) cooperating with the protruding finger (15) is formed between the side wall (2203) and the engaging boss (224).

3. The connector according to claim 2, wherein one of a wall body of the guide channel (2206) and the protruding finger (15) is provided with a limiting protrusion (225), and the other of the wall body of the guide channel (2206) and the protruding finger (15) is provided with a limiting recess (152); and
wherein when the two connectors (100) are connected to each other, the limiting protrusion (225) of any one of the two connectors (100) is engaged with the limiting recess (152) of the other of the two connectors (100) to prevent the relative rotation of the two connectors (100).

4. The connector according to claim 2, wherein the wall body of the concave portion (220) comprises two end walls (2202), and the two end walls are configured to limit a range of the relative rotation of the two connectors (100).

5. The connector according to claim 4, wherein the two end walls (2202) comprises a first end wall (22021) and a second end wall (22022), a notch (2204) is formed between the first end wall (22021) and the engaging boss (224), and the second end wall (22022) is connected to the engaging boss (224).

6. The connector according to claim 1, wherein an inner peripheral wall of the second end (12) of the first housing (1) comprises a curved wall surface (1201), an end surface (221) of the second end (22) of the second housing (2) has a curved protrusion (2211) extending toward the curved wall surface (1201), and a curved channel (202) is formed between the curved wall surface (1201) and the curved protrusion (2211);
wherein an end surface (221) of the second end (22) of the second housing (2) is provided with a curved tab (226) projecting outward, and the curved tab faces the engaging arm (14); and
wherein when the two connectors (100) are rotated relative to each other, the curved tab (226) of any one of the two connectors (100) is slidably engaged with the curved channel (202) of the other of the two connectors (100).

7. The connector according to claim 6, wherein the inner peripheral wall of the second end (12) of the first housing (1) further comprises a boss (1203) projecting from the curved wall surface (1201), and the boss (1203) of any one of the two connectors (100) is configured to be abutted against an end of the curved tab (226) of the other of the two connectors (100).

8. The connector according to claim 1, wherein an inner wall (141) of the engaging arm (14) extends about the rotation axis (X-X), the protruding finger projecting radially from the inner wall of the engaging arm (14); and/or
wherein abutting surfaces of the first housing (1) and the second housing (2) are in a concave-convex fit.

9. The connector according to claim 1, wherein the first housing (1) and the second housing (2) are engaged together or connected to each other by a fastener; and/or
a positioning member (24) configured to position the connecting cord (3) is provided in the accommodating cavity (10).

10. The connector according to claim 9, wherein a channel (242) configured to allow the connecting cord (3) to pass through is formed between a wall body of the accommodating cavity (10) and the positioning member (24), and the channel (242) is dimensioned so as not to allow the limiting member (311) disposed on the connecting cord (3) to pass through.

11. The connector according to claim 10, wherein the positioning member (24) extends from one of the first housing (1) and the second housing (2) along a direction perpendicular to the rotation axis (X-X), and the positioning member (24) has a center hole (240); and
wherein the other of the first housing (1) and the second housing (2) is provided with a mounting hole (104), through which the fastener (4) is connected to the center hole (240); or the other of the first housing (1) and the second housing (2) is provided with a connecting post (26) inserted into the center hole (240).

12. The connector according to claim 9, wherein one of the first housing (1) and the second housing (2) is provided with an elastic arm (25), the other of the first housing (1) and the second housing (2) is provided with an engaging hole (16), and the elastic arm (25) is detachably engaged with the engaging hole (16).

13. The connector according to claim 1, wherein an outer peripheral wall of the second housing (2) is provided with a lock identification portion (213).

14. A floating device, comprising a floating body, a connecting cord and the connector according to any one of claims 1 to 13, wherein the connecting cord is connected to the floating body, and the connector is connected to the connecting cord.
